Europäisches Patentamt

European Patent Office

Office européen des brevets

(11) Publication number: **0 143 755**
A2

# EUROPEAN PATENT APPLICATION

(21) Application number: 84830307.9

(22) Date of filing: 14.11.84

(51) Int. Cl.⁴: **G 09 F 3/02**, G 03 B 7/24, G 06 K 19/06

(30) Priority: 15.11.83 IT 6819483

(43) Date of publication of application: 05.06.85 Bulletin 85/23

(84) Designated Contracting States: **AT BE CH DE FR GB LI LU NL SE**

(71) Applicant: **Sales S.p.A., Via Chivasso 5, I-10096 Leumann (Torino) (IT)**

(72) Inventor: **Tessera Chiesa, Emilio, c/o SALES S.p.A. Via Chivasso 5, I-10096 Leumann (Torino) (IT)**

(74) Representative: **Buzzi, Franco et al, c/o Jacobacci-Casetta & Perani S.p.A. Via Alfieri, 17, I-10121 Torino (IT)**

(54) **Label having an electrically readable indentification code, particularly for photographic film cartridges, and a method for its manufacture.**

(57) A self-adhesive label bearing an electrically readable identifaction code is constituted by a sheet of paper or like material (2) having an adhesive face (3) and, glued to its opposite face (4), a flexible layer of material with a high electrical conductivity (5) predetermined zones of which are covered by a flexible coating of electrically insulating material (6) so as to present electrically conductive areas (7) disposed according to the identification code.

Its application is to the coding of photographic film cartridges.

- 1 -

Label having an electrically readable identification code, particularly for photographic film cartridges, and a method for its manufacture

The present invention relates generally to systems for identification by means of electrically readable codes, with particular application to photographic film cartridges.

In the field of photography, the tendency to code 35 mm films in order automatically to inform both the camera and the developing and printing apparatus about the type of film, its sensitivity, its length, the exposure range, and any other data has become more widespread.

This information is supplied electrically by means of an electrically readable identification code on the outside of the cartridge, through suitable detectors in the camera or in the developing and printing apparatus.

The techniques currently in use provide for the identification code to be applied directly to the sheets of metal used in the manufacture of the cartridges.

Such techniques involve considerable problems linked on the one hand to the difficulties and costs of the coded cartridges, and on the other hand to the need to store large quantities of cartridges bearing different identification codes.

In order to avoid these problems, it would be necessary to provide the identification code separately and to apply it subsequently to its film cartridge.

A particularly simple solution could consist of forming the code on a self-adhesive label to be applied subsequently to the surface of the cartridge. However, the currently known techniques for manufacturing self-adhesive labels with surfaces treated to present electrically conductive areas are wholly inadequate for application to photographic cartridges.

A first conventional method comprises the transfer, by hot pressing, of a very thin metal film onto the label, which in this case is of paper or similar material. This method does not allow the achievement of such values of electrical conductivity as to ensure reliable identification of the code.

According to another known method, the label is made from thin metal foil which is subsequently partially covered by printing with an electrically insulating material to obtain the desired code. The label thus obtained has considerable problems of application and durability when applied to a photographic cartridge, and the zones corresponding to the code have poor conductivity because of the surface treatments to which the metal foil must be subjected before receiving its printed coating.

The object of the present invention, therefore, is to provide a label with an electrically readable identification code, having characteristics such as to allow its effective application to photographic cartridges.

Another object of the invention is to provide a label for photographic cartridges, the identification code of which has characteristics of high electrical conductivity and durability with time.

A further object of the invention is to provide a label with an electrically readable identification code which is particularly simple and economical to produce.

The label according to the invention is characterised in that it is constituted by a sheet of paper or like material having an adhesive surface and, bonded to its opposite surface, a flexible layer of material with a high electrical conductivity, predetermined zones of which are covered by a flexible coating of electrically insulating material applied by printing, so as to present electrically conductive areas disposed according to the chosen identification code.

The layer of highly conductive material is metallic, preferably crude aluminium.

The electrically insulating coating for the layer is normally a polymerising typographic ink which may be applied by any conventional method of typographic printing, for example, offset printing, letterpress, rotogravure, flexographic printing, silk screen printing or thermographic printing.

The size of the layer may vary according to requirements but its width is generally equal to the width of the label while its length is less.

The thickness of the layer is preferably between 0.05 and 0.1mm.

The method for the manufacture of the label according to the invention provides for the bonding of the flexible layer of electrically conductive material to the surface of the sheet of paper opposite the adhesive surface of the label, and the printing of a flexible coating of electrically insulating material on chosen zones of the layer.

The bonding of the layer is preferably carried out under cold conditions using vinyl glues.

The invention will now be described in detail, with reference to the appended drawings, provided purely by way of non-limiting example, in which:

Figure 1 is a perspective view of a self-adhesive label according to the invention,

Figure 2 is a cross-section taken on the line II-II of Figure 1 on an enlarged scale,

Figure 3 is a longitudinal section taken on the line III-III of Figure 1 on an enlarged scale, and

Figure 4 is a perspective view illustrating the application of the label to a photographic cartridge.

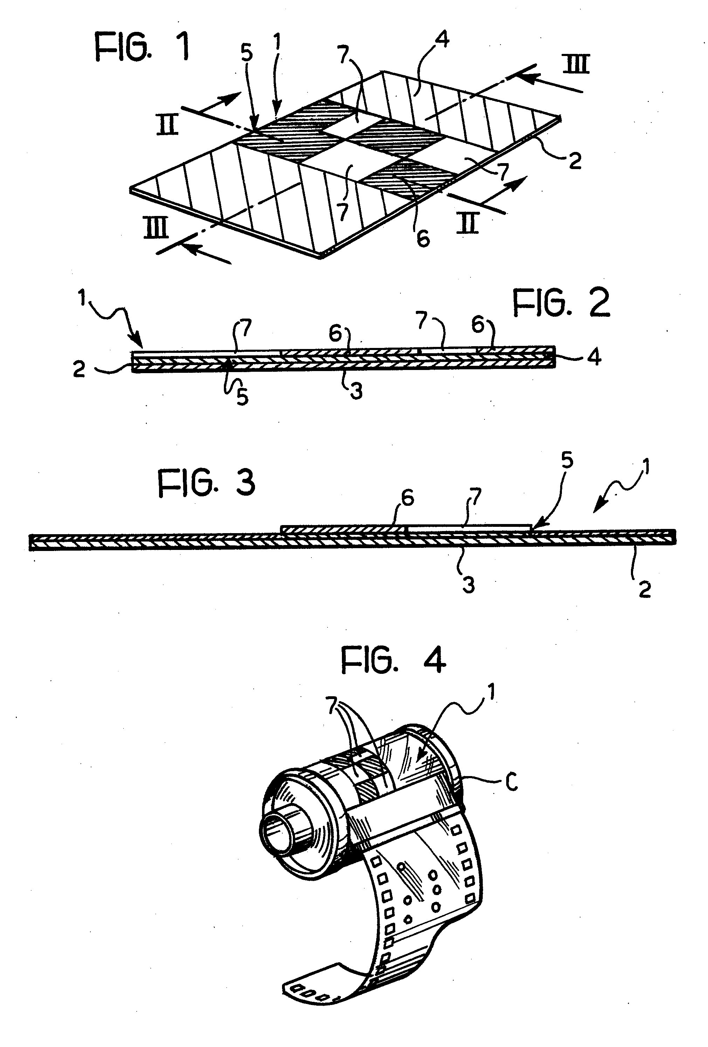

Referring initially to Figures 1 to 3, a self-adhesive label, generally indicated 1, is formed from a thin sheet 2 of paper or like material having an adhesive surface 3.

A thin layer 5 of electrically conductive material, preferably crude aluminium or aluminium with a surface treated to give it a high electrical conductivity, is applied to the surface of the sheet 2 opposite the adhesive surface 3. In the example illustrated, the layer 5 has a width equal to that of the sheet 2 and a length less than that of the sheet 2, so that it only partly covers it. The thickness of the layer 5 is preferably between 0.05 and 0.1 mm, for example 0.08 mm.

The layer 5 is partially covered by a thin flexible coating 6 of electrically insulating material so as to present electrically conductive areas 7 on its outwardly-facing surface, which are disposed according to a predetermined identification code. In the embodiment illustrated, the areas 7 are disposed substantially in a checkered fashion and have different sizes. They are connected together electrically but separated at the surface by the portions of the layer 5 covered by the material 6, which are obviously electrically non-conductive.

The covering material 6 is preferably a polymerising typographic ink, for example of the UV type, applied by conventional typographic printing methods of the offset, letterpress, rotogravure, flexographic, silk screen or thermographic type. The same ink may be used to cover the parts of the paper sheet 2 not covered by the layer 5.

In the method for the manufacture of the labels 1 according to the invention, one starts with a continuous sheet of paper having an adhesive surface and one then applies the metal layers 5 in the form of continuous strips. These strips are applied to the non-adhesive surface of the sheet of paper by gluing, normally under cold conditions using vinyl glues, and passing the sheet of paper and the metal strips between the rollers of a conventional bonding machine.

Subsequently, the sheet with the strips glued thereto is printed so that the electrically insulating ink is applied selectively to the metal strips to define the areas corresponding to the chosen identification code.

Finally, the sheet is cut into labels of the desired size.

The label according to the invention is used to particular advantage on photographic film cartridges C, as illustrated in Figure 4. The electrically conductive areas 7 of the layer 5 constitute a code for identifying the type of film, its sensitivity and any other useful parameter. This information can be detected by electrical sensors with which the cameras and developing and printing machines for the film may be provided in known manner.

The coding of the films may thus be achieved particularly simply and economically without the need for any direct operation on the cartridge during its manufacture, except, of course, for the application of the self-adhesive label.

The code formed on the label has good characteristics of electrical conductivity and durability which ensure its reliable and correct reading.

Experimental tests carried out by the Applicants have established that a label formed as an embodiment of the invention with a layer 5 of crude aluminium of a thickness of 0.08 mm and an
insulating coating 6 of hot-printed UV ink had,
in correspondence with the conductive zones 7, a
contact resistance notably less than 100 ohm and an
insulating resistance much greater than 600 kohm,
these values being completely satisfactory for the
coding of photographic cartridges.


**Naturally** the structural details of the label
and the steps of the method for its manufacture
may be varied widely with respect to that described
and illustrated, without thereby departing from
the scope of the present invention.

CLAIMS

1. A self-adhesive label bearing an electrically readable identification code, particularly for photographic film cartridges, characterised in that it is constituted by a sheet of paper or like material (2) having an adhesive surface (3) and, bonded to its opposite surface (4), a flexible layer (5) of material having a high electrical conductivity, predetermined zones of which are covered by a flexible coating (6) of electrically insulating material applied by printing, so as to present electrically conductive areas (7) disposed according to the chosen identification code.

2. Label according to Claim 1, characterised in that the layer (5) of electrically conductive material is metallic.

3. Label according to Claim 2, characterised in that the layer (5) is of crude aluminium.

4. Label according to Claim 3, characterised in that the layer (5) has a thickness of between 0.05 and 0.1 mm.

5. Label according to any one of the preceding claims, characterised in that the layer (5) is smaller than the sheet of paper (2).

6. Label according to any one of the preceding claims, characterised in that the layer (5) is glued to the sheet of paper (2).

7. Label according to any one of the preceding claims, characterised in that the electrically insulating material (6) is a typographic printing ink or a thermographic ink.

8. Method for applying an electrically readable identification code to a label of paper or like material having an adhesive surface, characterised in that it comprises the bonding of a flexible layer (5) of material with a high electrical conductivity to the surface of the sheet (2)of paper opposite the adhesive surface (3), and the printing of a flexible coating (6) of electrically insulating material on predetermined zones of the layer (5) of highly electrically conductive material, so as to define electrically conductive areas (7) on the surface of the layer (5) disposed according to the chosen identification code.

9. Method according to Claim 8, characterised in that the layer (5) of electrically conductive material is metallic.

10. Method according to Claim 9, characterised in that the layer (5) is of crude aluminium.

11. Method according to Claim 10, characterised in that the layer (5) has a thickness of between 0.05 and 0.1 mm.

12. Method according to any one of Claims 8 to 11, characterised in that the electrically insulating coating (6) is a polymerising typographic ink.

0143755

13. Method according to any one of Claism 8 to 12, characterised in that the layer (5) is cold-glued by means of a vinyl glue.

14. Label with an electrically readable identification code made by the process according to one or more of Claims 8 to 13.

1/1

0143755

FIG. 1

FIG. 2

FIG. 3

FIG. 4